# DEMANDE DE BREVET EUROPEEN

(11) **EP 1 868 407 A1**
(43) Date de publication de la demande: **19.12.2007**
(21) Numéro de dépôt: 07110135.6
(22) Date de dépôt: 12.06.2007
(51) Int. Cl.: H04Q 7/38

(54) **Dispositif de sélection de potentiel(s) futur(s) d'accés radio de rattachement de terminaux mobiles**

(30) Priorité: 15.06.2006 FR 0652135
(71) Demandeur: Alcatel Lucent, 75008 Paris (FR)
(72) Inventeur: Marce, Olivier, 91300, MASSY (FR); El Mghazli, Yacine, 94110, ARCUEIL (FR)
(74) Mandataire: El Manouni, Josiane

(57) **Abrégé**

Un dispositif (D) est dédié à la sélection de réseau d'accès radio (RA3) pour au moins un terminal mobile candidat (T1). Ce dispositif (D) comprend des moyens d'analyse (MA) chargés de déterminer, en fonction d'informations fournies par d'autres terminaux mobiles (T1-T2) et représentatives respectivement de leurs réseaux d'accès radio de rattachement, une suite de réseaux d'accès radio auxquels se sont successivement rattachés chacun de ces terminaux mobiles (T1, T2), puis de comparer la suite du terminal mobile candidat (T1) aux suites des autres terminaux mobiles (T2) afin de déterminer parmi ces suites celle(s) qui présenter(nt) une similitude avec la suite du terminal mobile candidat (T1), puis de rechercher dans la ou les suites déterminées un réseau d'accès radio auquel le terminal mobile candidat (T1) est susceptible de se rattacher prochainement compte tenu de sa propre suite.

## Description

L'invention concerne les réseaux de communication radio, et plus précisément la sélection anticipative, à un instant donné, des réseaux d'accès radio de tels réseaux auxquels des terminaux de communication mobiles sont susceptibles d'être rattachés dans un délai réduit, suite à leurs déplacements.

Comme le sait l'homme de l'art, lorsqu'un terminal (de communication) mobile, comme par exemple un téléphone mobile, se déplace, il peut être contraint de changer une ou plusieurs fois de réseau d'accès radio pour poursuivre une communication ou une session. Ce type de changement nécessite à chaque fois la mise en oeuvre d'une procédure de transfert de communication ou de session (ou « handover ») dont la rapidité d'exécution dépend aussi du nombre de réseaux d'accès radio auxquels un terminal mobile est susceptible de se rattacher lorsqu'il est sur le point de quitter la zone de couverture de l'un d'entre eux. En d'autres termes, lorsque peut être effectuée une sélection entre plusieurs réseaux d'accès radio, plus la sélection est rapide, plus la procédure de transfert (handover) est courte.

Il est donc important de déterminer de façon anticipative, le plus rapidement possible, le prochain réseau d'accès radio auquel va pouvoir se connecter un terminal mobile en phase de déplacement. Cela est d'autant plus important lorsque les zones de couverture radio des technologies d'accès sont petites, comme par exemple dans le cas de certains réseaux locaux sans fil (ou WLAN pour « Wireless Local Area Network »), tels que ceux implémentant une technologie de type WiFi, WiBro ou bien même WiMax avec une taille de cellule réduite.

Afin de faciliter la sélection, au moins trois solutions ont été proposées.

Une première solution, par exemple utilisée dans les réseaux mobiles 2G et 3G, consiste à effectuer la sélection au niveau de chaque réseau radio. Plus précisément, le réseau radio détermine pour chaque terminal mobile qui lui est rattaché, le nouveau réseau d'accès radio auquel il doit se rattacher. L'inconvénient majeur de cette première solution réside dans le fait que le réseau radio doit connaître à chaque instant tous les réseaux d'accès radio disponibles auxquels chaque terminal mobile est susceptible d'être rattaché, ce qui n'est généralement possible que lorsque le réseau radio comprend soit un unique domaine, soit plusieurs domaines partageant des informations sur tous les réseaux d'accès radio disponibles en chaque point.

Une deuxième solution consiste à configurer chaque terminal mobile de sorte qu'il recherche en permanence, par balayage, le réseau d'accès radio qui est le mieux adapté à ses besoins. L'inconvénient majeur de cette deuxième solution réside dans le fait qu'elle ne permet au terminal mobile que de détecter les réseaux d'accès radio qui sont très proches de lui. Or, lorsqu'un terminal mobile est dans une phase de mobilité rapide, il peut se retrouver en dehors de la zone de couverture de son réseau d'accès radio de rattachement avant d'avoir terminé son balayage et sa sélection. De plus, cette procédure de balayage est consommatrice d'énergie ce qui réduit la durée d'utilisation des terminaux de façon rédhibitoire.

Une troisième solution consiste à configurer chaque terminal mobile de sorte qu'il estime en permanence le trajet (ou « path ») qu'il pourrait éventuellement suivre de manière à en déduire son prochain réseau d'accès radio de rattachement. Une telle solution nécessite que chaque terminal mobile connaisse à l'avance différents trajets de mobilité possibles, ce qui n'est envisageable que dans certaines situations de mobilité sous contrainte, comme par exemple dans le cas de déplacements dans des trains, des métros ou des bus.

Aucune solution connue n'apportant une entière satisfaction, l'invention a donc pour but d'améliorer la situation.

Elle propose à cet effet un dispositif dédié à la sélection de réseau d'accès radio pour au moins un terminal mobile candidat, et comprenant des moyens d'analyse chargés de déterminer, en fonction d'informations fournies par d'autres terminaux mobiles et représentatives respectivement de leurs réseaux d'accès radio de rattachement, une suite de réseaux d'accès radio auxquels se sont successivement rattachés chacun de ces autres terminaux mobiles, puis de comparer la suite du terminal mobile candidat aux suites des autres terminaux mobiles, afin de déterminer parmi ces suites celle(s) qui présente(nt) une similitude avec la suite du terminal mobile candidat, puis de rechercher dans les suites déterminées le réseau d'accès radio auquel le terminal mobile candidat est susceptible de se rattacher prochainement compte tenu de sa propre suite (et donc de son déplacement).

Le dispositif selon l'invention peut comporter d'autres caractéristiques qui peuvent être prises séparément ou en combinaison, et notamment:
- ses moyens d'analyse peuvent être chargés de déterminer les suites en fonction d'informations représentatives des identifiants des réseaux d'accès radio de rattachement ;
- ses moyens d'analyse peuvent être chargés de déterminer parmi lesdites suites celle qui présente au moins deux réseaux d'accès radio successifs identiques aux deux derniers réseaux d'accès radio de rattachement désignés dans la suite du terminal mobile candidat ;
- il peut comprendre des moyens de stockage couplés à ses moyens d'analyse et chargés de stocker les informations représentatives des réseaux d'accès radio de rattachement des terminaux mobiles ;
- il peut comprendre des moyens de génération de messages chargés de générer, éventuellement périodiquement, des messages d'information contenant des informations représentatives d'au moins un réseau d'accès radio auquel est rattaché l'un au moins des terminaux mobiles ;
- il peut comprendre des moyens d'information chargés d'estimer un degré de similitude mesuré avec les autres terminaux, puis de déterminer la fiabilité attendue d'une connexion à un prochain réseau d'accès radio en fonction de ce degré de similitude estimé ;
- en présence d'informations temporelles auxiliaires, représentatives de la durée de présence d'un terminal dans un réseau d'accès radio, les moyens d'analyse peuvent être chargés d'effectuer leur choix en fonction d'une similitude de durées de présence dans les réseaux d'accès radio.

L'invention propose également un terminal mobile propre à se connecter à des réseaux d'accès radio et équipé d'un dispositif de sélection, du type de celui présenté ci-avant, et de moyens de réception propre à alimenter le dispositif en informations représentatives des réseaux d'accès radio de rattachement d'autres terminaux mobiles.

Les moyens de réception de ce terminal mobile peuvent être chargés de recevoir les informations des autres terminaux mobiles et/ou du réseau d'accès radio auquel leur terminal est rattaché.

Par ailleurs, ce terminal mobile peut comprendre des moyens d'émission chargés de transmettre des messages d'information générés par le dispositif et contenant une information représentative du réseau d'accès radio auquel leur terminal mobile est rattaché.

En outre, ce terminal mobile peut comprendre des moyens de traitement chargés de préparer la connexion à un futur réseau d'accès radio candidat (déterminé par le dispositif), en fonction de ce réseau d'accès radio candidat.

L'invention propose également un équipement de réseau équipé d'un dispositif de sélection du type de celui présenté ci-avant, ainsi qu'éventuellement de moyens de réception chargés de recevoir les informations de terminaux mobiles et/ou d'un réseau d'accès radio et de les communiquer au dispositif.

L'invention est particulièrement bien adaptée, bien que de façon non exclusive, aux réseaux locaux sans fil, par exemple de type WiFi, WiBro ou WiMax.

D'autres caractéristiques et avantages de l'invention apparaîtront à l'examen de la description détaillée ci-après, et des dessins annexés, sur lesquels :
- la figure 1 illustre de façon très schématique et fonctionnelle des terminaux mobiles, équipés chacun d'un premier exemple de réalisation d'un dispositif de sélection selon l'invention, et des réseaux locaux sans fil, et
- la figure 2 illustre de façon très schématique et fonctionnelle des terminaux mobiles et des réseaux locaux sans fil équipés chacun d'un second exemple de réalisation d'un dispositif de sélection selon l'invention.

Les dessins annexés pourront non seulement servir à compléter l'invention, mais aussi contribuer à sa définition, le cas échéant.

L'invention a pour objet de permettre la sélection anticipée, pour au moins un terminal mobile candidat, d'un potentiel nouveau réseau d'accès radio parmi un groupe de réseaux d'accès radio auquel il peut se connecter et qui sont éventuellement connectés à un coeur de réseau, fixe ou mobile.

Dans ce qui suit, on considère à titre d'exemple non limitatif, d'une part, que les réseaux d'accès radio sont des réseaux locaux sans fil de type WLAN, mettant en oeuvre une technologie d'accès sans fil de type WiFi, et d'autre part, que le coeur de réseau, connecté aux réseaux WLAN, appartient à un réseau mobile, par exemple de type UMTS. Mais, l'invention n'est ni limitée à ce type de réseau d'accès radio, ni à ce type de réseau mobile. Elle concerne en effet, tous les réseaux locaux sans fil disposant d'une technologie d'accès sans fil, et notamment les réseaux Bluetooth, WiFi et WiMax, ainsi que tous les réseaux d'accès radio des réseaux mobiles ou cellulaires, comme par exemple ceux de type RAN/3GPP ou BSS. L'invention concerne en outre tous les coeurs de réseau des réseaux de communication mobile ou cellulaire 3GPP (2G/3G) ou bien des réseaux fixes.

On notera que l'invention concerne également les situations dans lesquelles des réseaux d'accès radio de technologies différentes sont impliqués. Dans ce cas, il faut bien entendu qu'il existe un inter-fonctionnement (ou IW pour « InterWorking ») entre ces différents réseaux d'accès radio. Par exemple dans le cas de réseaux d'accès radio de types WLAN et RAN/3GPP, on peut avoir un inter-fonctionnement de type I-WLAN (« Interworking-WLAN ») ou GAN (« Generic Access Network », intégré dans le standard 3GPP après avoir été développé de façon indépendante sous l'acronyme UMA (« Unlicensed Mobile Access »). La solution GAN est définie sur le site du 3GPP à l'adresse Internet « http://www.3gpp.org » et la technologie UMA est définie à l'adresse Internet « http://www.umatechnology.org »)): La mise en oeuvre de chacun de ces deux types d'inter-fonctionnement nécessite l'implantation d'un équipement d'interconnexion, de type passerelle de sécurité (ou SecGW pour « Security GateWay»), à l'interface entre le réseau d'accès sans fil d'un réseau WLAN et les infrastructures du coeur de réseau d'un réseau mobile.

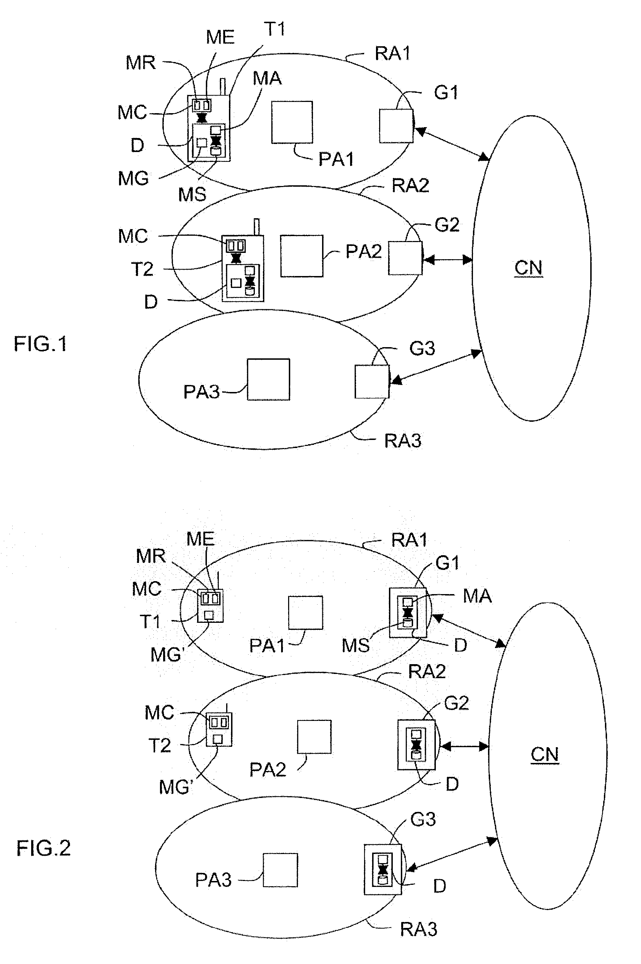

Dans l'exemple non limitatif illustré sur les figures 1 et 2, on a représenté trois réseaux d'accès sans fil RA1 à RA3 couplés à un coeur de réseau CN, par exemple de type « 3GPP WLAN IP Access », d'un réseau UMTS.

Chaque réseau d'accès sans fil RAi (ici i = 1 à 3, mais l'indice i peut prendre n'importe quelle valeur supérieure ou égale à 3), dispose d'une zone de couverture radio (ici matérialisée schématiquement par une ellipse), pourvue d'au moins un équipement d'accès radio (ou point d'accès) PAi auquel peuvent se connecter des terminaux de communication mobile Tj (ici j = 1 et 2, mais l'indice j peut prendre n'importe quelle valeur supérieure ou égale à 2). Par ailleurs, chaque réseau d'accès sans fil RAi dispose d'un équipement de réseau de type routeur d'accès (éventuellement IP (Internet)) ou passerelle Gi connecté(e) au coeur de réseau CN du réseau mobile et assurant l'inter-fonctionnement entre son réseau WLAN RAi et le réseau mobile.

On entend ici par « terminal de communication mobile » tout terminal de communication capable de se connecter à un réseau d'accès radio afin d'échanger des données par voie d'ondes, sous la forme de signaux, avec un autre équipement d'utilisateur ou un équipement de réseau. Il pourra donc s'agir, par exemple, d'un téléphone mobile, d'un assistant personnel numérique (ou PDA), d'un ordinateur portable équipé d'un dispositif de communication radio (éventuellement de type WLAN), d'un lecteur vidéo avec accès Wifi, ou d'un équipement de véhicule ou de conteneur.

L'invention propose un dispositif D chargé de sélectionner un réseau d'accès radio RAi pour au moins un terminal (de communication) mobile Tj. Dans l'exemple non limitatif illustré sur la figure 1, chaque terminal mobile Tj est équipé d'un tel dispositif de sélection D. Dans la variante non limitative illustrée sur la figure 2, chaque réseau d'accès sans fil RAi dispose d'au moins un dispositif de sélection D. Plus précisément, dans cette variante un routeur d'accès ou une passerelle Gi de chaque réseau d'accès sans fil RAi est pourvu(e) d'un dispositif de sélection D. Mais cela n'est pas obligatoire, un dispositif de sélection D pouvant en effet être implanté dans un autre type d'équipement de réseau de chaque réseau d'accès sans fil RAi ou bien dans un équipement de réseau d'un coeur de réseau (ou couplé à ce dernier), comme par exemple dans un serveur. Le dispositif D peut également être distribué entre plusieurs éléments, qu'il s'agisse d'un ou plusieurs terminaux ou d'un ou plusieurs équipements de réseau.

Selon l'invention, chaque dispositif de sélection D reçoit des informations qui représentent les réseaux d'accès sans fil RAi auxquels sont rattachés les terminaux mobiles Tj. Ces informations peuvent être fournies par les terminaux mobiles Tj sous la forme de messages d'information transmis par voie d'ondes. Dans l'exemple non limitatif illustré sur la figure 1, chaque dispositif de sélection D comprend un module de génération de messages d'information MG. Mais, comme cela est illustré dans la variante non limitative de la figure 2, le module de génération de messages d'information MG' peut ne pas faire partie du dispositif D, en particulier lorsque celui-ci n'est pas implanté dans le terminal mobile Tj.

Chaque module de génération de messages d'information MG, MG' peut générer ses messages d'information de façon périodique ou bien chaque fois que son terminal mobile Tj vient de se rattacher à un nouveau réseau d'accès sans fil RAi, ou encore chaque fois qu'il reçoit une requête à cet effet, ou encore consécutivement à n'importe quelle sollicitation d'un élément externe ou interne au terminal mobile Tj.

L'information, qu'un module de génération MG, MG' intègre dans un message d'information, peut par exemple se présenter sous la forme de l'identifiant du réseau d'accès sans fil RAi auquel est momentanément rattaché le terminal mobile Tj dans lequel il est implanté.

Chaque message d'information généré par un module de génération MG, MG' est transmis par le terminal mobile Tj dans lequel il est implanté au moyen du module d'émission ME de son module de communication radio MC.

Tout type de transmission des messages d'information peut être envisagé, et notamment la diffusion depuis un terminal mobile Tj vers des terminaux mobiles Tj', directe et/ou via des répéteurs, par exemple au moyen d'un protocole de type « ad-hoc », la diffusion depuis un terminal mobile Tj vers des équipements d'accès radio PAi des réseaux d'accès sans fil RAi en vue d'une diffusion vers les terminaux mobiles Tj soit sans traitement particulier, soit sous une autre forme, comme par exemple après avoir intégré leur information dans un message d'un autre type, tel qu'un message de routage (par exemple).

Dans l'exemple de la figure 1, le dispositif de sélection D reçoit les messages d'information au moyen d'un module de réception MR du module de communication radio MC du terminal mobile Tj dans lequel il est implanté, tandis que dans l'exemple de la figure 1, le dispositif de sélection D reçoit les messages d'information de l'équipement d'accès radio PAi du réseau d'accès sans fil RAi auquel appartient le routeur d'accès ou la passerelle Gi dans lequel il est implanté.

Comme cela est illustré sur les figures 1 et 2, chaque dispositif de sélection D peut éventuellement comprendre un module de stockage MS chargé de stocker les identifiants des réseaux d'accès sans fil RAi (ou informations) auxquels sont successivement rattachés les terminaux mobiles Tj. Afin de ne pas nécessiter des capacités de stockage trop importantes, on peut par exemple prévoir de ne stocker pour chaque terminal mobile Tj que les N derniers identifiants (y compris celui courant), la valeur N pouvant être fixée de n'importe quelle façon ou bien calculée pendant que le terminal mobile Tj fonctionne.

Selon l'invention, chaque dispositif de sélection D comprend un module d'analyse MA qu'il alimente avec les messages d'information et/ou les informations reçu(e)s.

Ce module d'analyse MA est chargé de déterminer, en fonction des informations en sa possession (représentatives respectivement des réseaux d'accès radio de rattachement des terminaux mobiles Tj), une suite des réseaux d'accès sans fil RAi auxquels se sont successivement rattachés chacun de ces terminaux mobiles Tj. On entend ici par « suite de réseaux d'accès sans fil » une suite comportant au moins un identifiant de réseau d'accès sans fil RAi.

Une fois que le module d'analyse MA a déterminé des suites, il compare celle d'au moins un terminal mobile candidat Tj à celles des autres terminaux mobiles Tj'. On comprendra que lorsque le dispositif D est implanté dans un terminal mobile Tj, son module d'analyse MA ne procède qu'à la comparaison de la suite Sj de son terminal mobile Tj à celles Sj' des autres terminaux mobiles Tj', tandis que lorsque le dispositif D est implanté dans un équipement de réseau (par exemple Gi), son module d'analyse MA procède à la comparaison de la suite Sj d'au moins certains terminaux mobiles Tj à celles Sj' d'autres terminaux mobiles Tj.

Cette comparaison est destinée à déterminer parmi les suites Sj' celle(s) qui présente(nt) une similitude avec la suite Sj d'un terminal mobile candidat Tj. L'objectif est en effet de déterminer au moins un terminal mobile Tj' dont l'historique de rattachement est en avance d'au moins une unité sur celui d'un terminal mobile candidat Tj et ressemble au moins partiellement à son propre historique de rattachement (ces terminaux mobiles présentent en effet des mobilités similaires). On entend ici par « historique de rattachement » l'historique des réseaux d'accès sans fil auxquels un terminal mobile Tj s'est successivement rattaché.

Par exemple, la similitude peut porter sur l'identité avec au moins les deux derniers réseaux d'accès radio de rattachement (y compris celui courant) du terminal mobile candidat Tj.

Une fois que le module d'analyse MA a déterminé une suite Sj' présentant une similitude avec celle Sj d'un terminal mobile candidat Tj, il recherche dans cette suite Sj' le prochain réseau d'accès radio auquel le terminal mobile candidat Tj est susceptible de se rattacher. Ce prochain potentiel réseau d'accès radio de rattachement peut en effet être (avec une forte probabilité) celui qui est placé dans la suite Sj' du terminal mobile déterminé Tj' immédiatement après le réseau d'accès sans fil qui termine sa partie présentant la similitude avec celle du terminal mobile candidat Tj (et qui est le réseau d'accès sans fil courant de ce dernier).

Lorsque plusieurs suites Sj' présentent une similitude avec la suite Sj d'un terminal mobile candidat Tj, on peut par exemple envisager que le module d'analyse MA choisisse celle qui présente le plus grand nombre d'identifiants successifs identiques à et dans le même ordre que ceux de Sj. D'autres algorithmes de choix sont possibles, en particulier si les informations transmises comprennent, en plus de l'identifiant de réseau, une information temporelle, telle qu'un horodatage (réalisé par exemple par un signal de synchronisation envoyé par le réseau, ou bien encore par un système de positionnement, comme par exemple un système GPS (« Global Positioning System »)). Dans ce cas, le module d'analyse MA peut faire son choix sur la similitude des durées de présence dans les différents réseaux d'accès radio.

Par exemple, si le terminal mobile T1 (illustré sur la figure 1) a signalé qu'à un instant donné t(0) il était rattaché au réseau d'accès sans fil RA1, puis qu'à un instant suivant t(1) il est rattaché au réseau d'accès sans fil RA2, alors le dispositif D qui effectue la sélection pour le terminal mobile T1 en déduit que la suite S1 de ce dernier comprend les identifiants de RA1 et RA2, successivement et dans cet ordre. Afin de déterminer de façon anticipative l'identifiant du prochain potentiel réseau d'accès sans fil de rattachement du terminal mobile T1, il cherche parmi les suites Sj' (j' ≠) des autres terminaux mobiles Tj' si l'une d'entre elles contient les identifiants de RA1 et RA2, successivement et dans cet ordre. Par exemple, si le terminal mobile T2 a signalé qu'à un instant donné t(-1) il était rattaché au réseau d'accès sans fil RA1, qu'à un instant suivant t(0) il était rattaché au réseau d'accès sans fil RA2, et qu'à un instant suivant t(1) il était rattaché au réseau d'accès sans fil RA3, alors le dispositif D qui effectue la sélection en déduit que la suite S2 du terminal mobile T2 comprend les identifiants de RA1, RA2 et RA3, successivement et dans cet ordre, Il sait alors que la suite S2 comprend une portion identique à celle S1 du terminal mobile T1. Plus précisément, les suites S1 et S2 ont en commun les identifiants de RA1 et RA2, successivement et dans cet ordre. Le module d'analyse MA du dispositif D en déduit que le prochain potentiel réseau d'accès radio de rattachement du terminal mobile T1 peut être RA3.

La connaissance du prochain potentiel réseau d'accès radio de rattachement d'un terminal mobile candidat Tj peut par exemple (mais non nécessairement) permettre d'effectuer des préparatifs en vue d'une éventuelle future connexion du terminal mobile candidat Tj au prochain potentiel réseau d'accès radio. Il est en effet souvent préférable de « faire (une nouvelle) connexion avant de défaire (une ancienne connexion) ». A cet effet, un terminal mobile Tj peut par exemple comporter un module de traitement couplé au dispositif D et chargé d'effectuer des préparatifs à une future connexion en fonction du ou des réseaux d'accès radio candidats (déterminé(s) par le dispositif D).

On notera que lorsque le dispositif D est implanté dans un terminal mobile Tj, on peut envisager que son fonctionnement soit activé ou désactivé par l'utilisateur. Par ailleurs, dans ce cas, on peut envisager que le dispositif D dispose d'un moyen d'information chargé d'estimer le degré de similitude mesuré avec les autres terminaux, puis de déterminer la fiabilité attendue de la connexion à un prochain réseau d'accès radio en fonction de ce degré de similitude estimé. Ce moyen d'information peut par exemple délivrer à son terminal mobile Tj des données représentatives d'un graphique (éventuellement en barres) indiquant un taux de similitude, lequel peut alors être affiché sur l'écran dudit terminal mobile Tj afin d'informer son utilisateur de la fiabilité attendue de la prochaine connexion.

Le dispositif de sélection D selon l'invention, et notamment son module d'analyse MA et ses éventuels module de génération de messages MG et module de stockage MS, peuvent être réalisés sous la forme de circuits électroniques, de modules logiciels (ou informatiques), ou d'une combinaison de circuits et de logiciels,

L'invention ne se limite pas aux modes de réalisation de dispositif de sélection, de terminal mobile et d'équipement de réseau décrits ci-avant, seulement à titre d'exemple, mais elle englobe toutes les variantes que pourra envisager l'homme de l'art dans le cadre des revendications ci-après.

## Revendications

1. Dispositif (D) de sélection de réseau d'accès radio (RAi) pour au moins un terminal mobile candidat (Tj), **caractérisé en ce qu'**il comprend des moyens d'analyse (MA) agencés pour déterminer, en fonction d'informations fournies par d'autres terminaux mobiles (Tj') et représentatives respectivement de leurs réseaux d'accès radio de rattachement, une suite de réseaux d'accès radio auxquels se sont successivement rattachés chacun desdits autres terminaux mobiles (Tj'), puis pour comparer la suite dudit terminal mobile candidat (Tj) aux suites desdits autres terminaux mobiles (Tj') de manière à déterminer parmi ces suites celle(s) qui présente(nt) une similitude avec ladite suite dudit terminal mobile candidat (Tj), puis pour rechercher dans ladite (lesdites) suite(s) déterminée(s) un réseau d'accès radio auquel ledit terminal mobile candidat (Tj) est susceptible de se rattacher prochainement compte tenu de sa propre suite.

2. Dispositif selon la revendication 1, **caractérisé en ce que** lesdits moyens d'analyse (MA) sont agencés pour déterminer lesdites suites en fonction d'informations représentatives d'identifiants de réseau d'accès radio (RAi).

3. Dispositif selon l'une des revendications 1 et 2, **caractérisé en ce que** lesdits moyens d'analyse (MA) sont agencés pour déterminer parmi lesdites suites celle(s) qui présente(nt) au moins deux réseaux d'accès radio successifs identiques aux deux derniers réseaux d'accès radio de rattachement désignés dans la suite dudit terminal mobile candidat (Tj).

4. Dispositif selon l'une des revendications 1 à 3, **caractérisé en ce qu'**il comprend des moyens de stockage (MS) couplés auxdits moyens d'analyse (MA) et agencés pour stocker lesdites informations représentatives des réseaux d'accès radio de rattachement (RAi) des terminaux mobiles (Tj, Tj').

5. Dispositif selon l'une des revendications 1 à 4, **caractérisé en ce qu'**il comprend des moyens de génération de messages (MG) agencés pour générer des messages d'information contenant des informations représentatives d'au moins un réseau d'accès radio (RAi) auquel est rattaché l'un au moins desdits terminaux mobiles (Tj, Tj').

6. Dispositif selon la revendication 5, **caractérisé en ce que** lesdits moyens de génération de messages (MG) sont agencés pour générer périodiquement lesdits messages d'information.

7. Dispositif selon l'une des revendications 1 à 6, **caractérisé en ce qu'**il comprend des moyens d'information agencés pour estimer un degré de similitude mesuré avec lesdits autres terminaux, puis pour déterminer la fiabilité attendue d'une connexion à un prochain réseau d'accès radio en fonction dudit degré de similitude estimé.

8. Dispositif selon l'une des revendications 1 à 7, **caractérisé en ce qu'**en présence d'informations temporelles auxiliaires représentatives d'une durée de présence d'un terminal (Tj, Tj') dans un réseau d'accès radio, lesdits moyens d'analyse MA sont agencés pour effectuer leur choix en fonction d'une similitude de durées de présence dans lesdits réseaux d'accès radio.

9. Terminal mobile (Tj) propre à se connecter à des réseaux d'accès radio (RAi), **caractérisé en ce qu'**il comprend un dispositif de sélection (D) selon l'une des revendications précédentes, ledit dispositif (D) étant couplé à des moyens de réception (MR) de manière à être alimenté en informations représentatives des réseaux d'accès radio de rattachement (RAi) d'autres terminaux mobiles (Tj').

10. Terminal mobile selon la revendication 9, **caractérisé en ce que** lesdits moyens de réception (MA) sont agencés pour recevoir lesdites informations desdits autres terminaux mobiles (Tj') et/ou du réseau d'accès radio (RAi) auquel leur terminal mobile (Tj) est rattaché.

11. Terminal mobile selon l'une des revendications 9 et 10, **caractérisé en ce qu'**il comprend des moyens d'émission (ME) agencés pour transmettre des messages d'information générés par ledit dispositif (D) et contenant une information représentative du réseau d'accès radio (RAi) auquel ledit terminal mobile (Tj) est rattaché.

12. Terminal mobile selon l'une des revendications 9 à 11, **caractérisé en ce qu'**il comprend des moyens de traitement agencés pour préparer une connexion à un futur réseau d'accès radio candidat, déterminé par ledit dispositif (D), en fonction dudit réseau d'accès radio candidat.

13. Equipement de réseau (Gi) pour un réseau radio, **caractérisé en ce qu'**il comprend un dispositif de sélection (D) selon l'une des revendications 1 à 8.

14. Equipement de réseau selon la revendication 13, **caractérisé en ce qu'**il comprend en outre des moyens de réception (MR) agencés pour recevoir lesdites informations desdits terminaux mobiles (Tj, Tj') et/ou d'un réseau d'accès radio (RAi) et pour les communiquer audit dispositif (D).
